# EUROPEAN PATENT APPLICATION

(11) **EP 3 311 677 A1**
(43) Date of publication of application: **25.04.2018**
(21) Application number: 17196473.7
(22) Date of filing: 10.02.2012
(51) Int. Cl.: A23L 2/60, A23L 27/30

(54) **STEVIA COMPOSITION**

(30) Priority: 10.02.2011 US 201161441443 P; 11.05.2011 WO PCT/US2011/036063; 13.05.2011 US 201113129158; 20.06.2011 US 201161499171 P
(62) Divisional of application: 12744188.9
(71) Applicant: Purecircle USA, Oak Brook, IL 60523-1492 (US)
(72) Inventor: PURKAYASTHA, Siddhartha, London, SW6 7HP (GB); CANAR, Michele, M., Park Ridge, IL 60068 (US); MARKOSYAN, Avetik, 375064 Yerevan (AM)
(74) Representative: Spencer, Michael David

(57) **Abstract**

Stevia compositions are prepared from steviol glycosides of Stevia Rebaudiana Bertoni. The compositions are able to provide a superior taste profile and can be used as sweetness enhancers, flavour enhancers and sweeteners in foods, beverages, cosmetics and pharmaceuticals.

## Description

### BACKGROUND OF THE INVENTION

### Field of the Invention

The invention relates to a composition for producing a highly purified food ingredient from the extract of the *Stevia Rebaudiana* Bertoni plant and its use in various food products and beverages.

### Description of the Related Art

Nowadays sugar alternatives are receiving increasing attention due to awareness of many diseases in conjunction with consumption of high-sugar foods and beverages. However many artificial sweeteners such as dulcin, sodium cyclamate and saccharin were banned or restricted in some countries due to concerns on their safety. Therefore non-caloric sweeteners of natural origin are becoming increasingly popular. The sweet herb *Stevia Rebaudiana* Bertoni produces a number of diterpene glycosides which feature high intensity sweetness and sensory properties superior to those of many other high potency sweeteners.

The above-mentioned sweet glycosides, have a common aglycon, steviol, and differ by the number and type of carbohydrate residues at the C13 and C19 positions. The leaves of Stevia are able to accumulate up to 10-20% (on dry weight basis) steviol glycosides. The major glycosides found in Stevia leaves are Rebaudioside *A* (2-10%), stevioside (2-10%), and Rebaudioside *C* (1-2%). Other glycosides such as Rebaudioside *B, D, E,* and *F*, steviolbioside and rubusoside are found at much lower levels (approx. 0-0.2%).

Two major glycosides - stevioside and Rebaudioside *A* (Reb *A*), were extensively studied and characterized in terms of their suitability as commercial high intensity sweeteners. Stability studies in carbonated beverages confirmed their heat and pH stability (Chang S.S., Cook, J.M. (1983) Stability studies of stevioside and Rebaudioside A in carbonated beverages. J. Agric. Food Chem. 31: 409-412.)

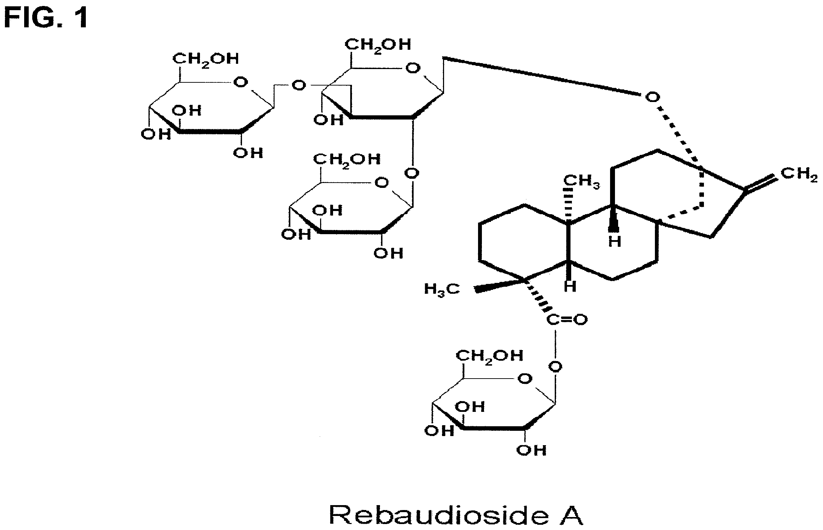

Steviol glycosides differ from each other not only by molecular structure, but also by their taste properties. Usually stevioside is found to be 110-270 times sweeter than sucrose, Rebaudioside *A* between 150 and 320 times, and Rebaudioside *C* between 40-60 times sweeter than sucrose. Dulcoside *A* is 30 times sweeter than sucrose. Rebaudioside *A* has the least astringent, the least bitter, and the least persistent aftertaste thus possessing the most favorable sensory attributes in major steviol glycosides (Tanaka O. (1987) Improvement of taste of natural sweeteners. Pure Appl. Chem. 69:675-683; Phillips K.C. (1989) Stevia: steps in developing a new sweetener. In: Grenby T.H. ed. Developments in sweeteners, vol. 3. Elsevier Applied Science, London. 1-43). The chemical structure of Rebaudioside *A* is shown in Fig. 1.

Methods for the extraction and purification of sweet glycosides from the *Stevia Rebaudiana* plant using water or organic solvents are described in, for example, U.S. Patent Numbers 4,361,697; 4,082,858; 4,892,938; 5,972,120; 5,962,678; 7,838,044 and 7,862,845.

However, even in a highly purified state, steviol glycosides still possess undesirable taste attributes such as bitterness, sweet aftertaste, licorice flavor, etc. One of the main obstacles for the successful commercialization of stevia sweeteners are these undesirable taste attributes. It was shown that these flavor notes become more prominent as the concentration of steviol glycosides increases (Prakash I., DuBois G.E., Clos J.F., Wilkens K.L., Fosdick L.E. (2008) Development of Rebiana, a natural, non-caloric sweetener. Food Chem. Toxicol., 46, S75-S82.).

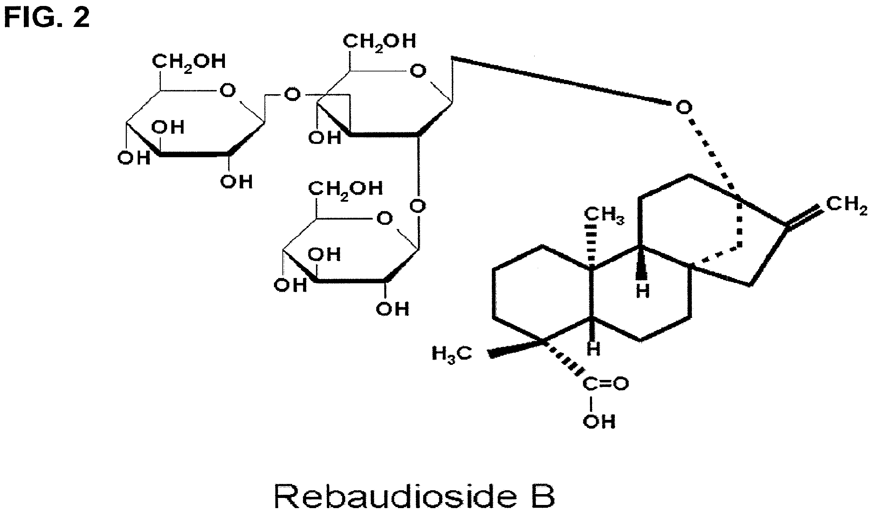

Rebaudioside *B* (CAS No: 58543-17-2), or Reb *B,* also known as stevioside *A₄* (Kennelly E.J. (2002) Constituents of Stevia Rebaudiana In Stevia: The genus Stevia, Kinghorn A.D. (Ed), Taylor & Francis, London, p.71), is one of the sweet glycosides found in *Stevia Rebaudiana.* Sensory evaluations show that Reb *B* was approximately 300-350 times sweeter than sucrose, while for Reb *A* this value was approximately 350-450 (Crammer, B. and Ikan, R. (1986) Sweet glycosides from the Stevia plant. Chemistry in Britain 22, 915-916, and 918). The chemical structure of Rebaudioside *B* is shown in Fig. 2.

It was believed that Reb *B* forms from partial hydrolysis of Rebaudioside *A* during the extraction process (Kobayashi, M., Horikawa, S., Degrandi, I.H., Ueno, J. and Mitsuhashi, H. (1977) Dulcosides A and B, new diterpene glycosides from Stevia Rebaudiana. Phytochemistry 16, 1405-1408). However further research shows that Reb *B* occurs naturally in the leaves of *Stevia Rebaudiana* and currently it is one of nine steviol glycosides recognized by FAO/JECFA (United Nations' Food and Agriculture Organization/Joint Expert Committee on Food Additives) in calculating total steviol glycosides' content in commercial steviol glycosides preparations (FAO JECFA (2010) Steviol Glycosides, Compendium of Food Additive Specifications, FAO JECFA Monographs 10, 17-21).

It is also noted that no significant work has been conducted to determine the potential of Reb *B* as a sweetener or food ingredient. Moreover Reb *B* is often viewed as process artifact and unnecessary impurity in commercial steviol glycosides preparations. No significant evaluation of Reb *B* influence on overall taste profile of steviol glycosides preparations has been conducted.

On the other hand, the water solubility of Reb *B* is reported to be about 0.1% (Kinghorn A.D. (2002) Constituents of Stevia Rebaudiana In Stevia: The genus Stevia, Kinghorn A.D. (Ed), Taylor & Francis, London, p.8). In many food processes where highly concentrated ingredients are used, a highly soluble form of Reb *B* will be necessary.

Considering the facts mentioned above, it is necessary to evaluate Reb *B* as a sweetener and food ingredient and develop a simple and efficient process for food grade Reb B preparations suitable for food applications.

In this invention, a process is developed to make Reb B and Reb a mixture or a combination of different glycosides. The process involved precise control of pH, temperature and time to achieve blends of different ratios of Reb A and Reb B and to make the mixer more soluble than a mechanical blend of Reb A and Reb B.

Within the description of this invention we will show that, when applied in specific manner, certain blend of Reb *B* with other steviol glycosides, especially Reb A, may impact the taste profile and offer significant advantages for stevia sweeteners' use in various applications.

### SUMMARY OF THE INVENTION

The present invention is aimed to overcome the disadvantages of existing Stevia sweeteners. The invention describes blends of steviol glycosides and Reb B for producing a high purity food ingredient from the extract of the *Stevia Rebaudiana* Bertoni plant and use thereof in various food products and beverages as a sweetness and flavor modifier.

The invention, in part, pertains to an ingredient comprising steviol glycosides of *Stevia Rebaudiana* Bertoni plant. The steviol glycosides are selected from the group consisting of stevioside, Rebaudioside *A,* Rebaudioside *B,* Rebaudioside *C,* Rebaudioside *D,* Rebaudioside *E,* Rebaudioside *F,* dulcoside *A,* steviolbioside, rubusoside, as well as other steviol glycosides found in *Stevia Rebaudiana* Bertoni plant and mixtures thereof.

The invention, in part, pertains to specific blends of different steviol glycosides for producing an ingredient containing Rebaudioside *B,* and stevioside, Rebaudioside *A,* Rebaudioside *C,* Rebaudioside *D,* Rebaudioside *E,* Rebaudioside *F,* dulcoside *A,* steviolbioside, rubusoside, as well as other steviol glycosides found in *Stevia Rebaudiana* Bertoni plant and mixtures thereof.

In the invention, Rebaudioside *A* commercialized by PureCircle Sdn. Bhd. (Malaysia), containing, Rebaudioside *A* (about 95-100%), stevioside (about 0-1%), Rebaudioside *C* (about 0-1%), Rebaudioside *F* (about 0-1%), Rebaudioside *B* (about 0.1-0.8%), Rebaudioside *D* (about 0-1%), and other glycosides amounting to total steviol glycosides' content of at least 95%, was used as a starting material. Alternatively stevia extracts with different ratio of steviol glycosides may be used as starting materials.

The starting material was subjected to partial conversion into Reb *B* under controlled pH and temperature conditions in aqueous media free of any co-solvents. The obtained glycoside mixtures were used "as-is" as well as Reb *B* was recovered and used as a pure ingredient. The solubility of Reb *B* thus obtained, or blends that include Reb *B,* can optionally be enhanced by a gradient thermal process, for example as described in PCT/US2011/036063.

The compositions can be used as sweetness enhancer, flavor enhancer and sweetener in various food and beverage products. Non-limiting examples of beverage products include carbonated and still beverages, flavored water, juice-based beverages, energy drinks and powder soft drinks. Non-limiting examples of food include dairy products (yogurt, yogurt drinks, flavored milk, frozen dairy desserts including ice cream), baked goods and baking mixes (bread, biscuits, cookies, muffins, rolls, and baking mixes), sauces and gravies, jams and jellies, gelatins, puddings and fillings, soy sauce and other soy based products, breakfast cereals, condiments and relishes, confections and frostings, processed fruits and vegetables, sugar substitutes and confectionery products including chewing gums.

It is to be understood that both the foregoing general description and the following detailed description are exemplary and explanatory and are intended to provide further explanation of the invention as claimed.

### BRIEF DESCRIPTION OF THE DRAWINGS

The accompanying drawings are included to provide a further understanding of the invention. The drawings illustrate embodiments of the invention and together with the description serve to explain the principles of the embodiments of the invention.
FIG. 1 shows the chemical structure of Rebaudioside *A*.
FIG. 2 shows the chemical structure of Rebaudioside *B*
FIG. 3 shows the sweetness profile of Reb A and Reb B
FIG. 4 shows the sweetness profile of different ratios of Reb A to Reb B (RebA/RebB).
FIG. 5 shows the sweetness potency of Reb A, Reb B and an 84/16 RebA/RebB blend.
Fig. 6 shows the synergy between a natural flavor modifier (NSF02, available from PureCircle) with Reb A or PureCircle Alpha, a combination of Reb A and Reb B with minute amount of steviol glycosides .

### DETAILED DESCRIPTION OF THE INVENTION

Advantages of the present invention will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

The compositions can be used as sweetness enhancer, flavor enhancer and sweetener in various food and beverage products. Non-limiting examples of food and beverage products include carbonated soft drinks, ready to drink beverages, energy drinks, isotonic drinks, low-calorie drinks, zero-calorie drinks, sports drinks, teas, fruit and vegetable juices, juice drinks, dairy drinks, yoghurt drinks, alcohol beverages, powdered beverages, bakery products, cookies, biscuits, baking mixes, cereals, confectioneries, candies, toffees, chewing gum, dairy products, flavored milk, yoghurts, flavored yoghurts, cultured milk, soy sauce and other soy base products, salad dressings, mayonnaise, vinegar, frozen-desserts, meat products, fish-meat products, bottled and canned foods, tabletop sweeteners, fruits and vegetables.

Additionally the compositions can be used in drug or pharmaceutical preparations and cosmetics, including but not limited to toothpaste, mouthwash, cough syrup, chewable tablets, lozenges, vitamin preparations, and the like.

The compositions can be used "as-is" or in combination with other sweeteners, flavors and food ingredients.

Non-limiting examples of sweeteners include steviol glycosides, stevioside, Rebaudioside *A,* Rebaudioside *B,* Rebaudioside *C,* Rebaudioside *D,* Rebaudioside *E,* Rebaudioside *F,* dulcoside *A,* steviolbioside, rubusoside, as well as other steviol glycosides found in *Stevia Rebaudiana* Bertoni plant and mixtures thereof, stevia extract, Luo Han Guo extract, mogrosides, high-fructose corn syrup, corn syrup, invert sugar, fructooligosaccharides, inulin, inulooligosaccharides, coupling sugar, maltooligosaccharides, maltodextins, corn syrup solids, glucose, maltose, sucrose, lactose, aspartame, saccharin, sucralose, sugar alcohols.

Non-limiting examples of flavors include lemon, orange, fruit, banana, grape, pear, pineapple, bitter almond, cola, cinnamon, sugar, cotton candy, vanilla flavors.

Non-limiting examples of other food ingredients include flavors, acidulants, organic and amino acids, coloring agents, bulking agents, modified starches, gums, texturizers, preservatives, antioxidants, emulsifiers, stabilizers, thickeners, gelling agents.

The following examples illustrate various embodiments of the invention. It will be understood that the invention is not limited to the materials, proportions, conditions and procedures set forth in the examples, which are only illustrative.

### EXAMPLE 1

### Effect of stevia composition on sweetness profile in water

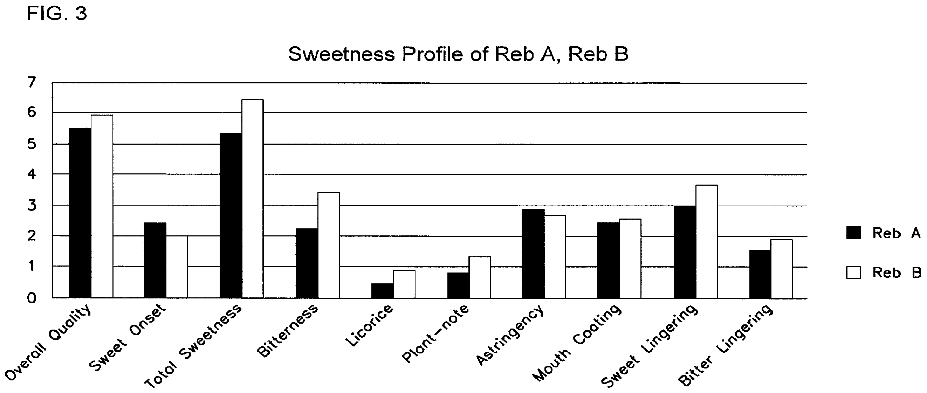

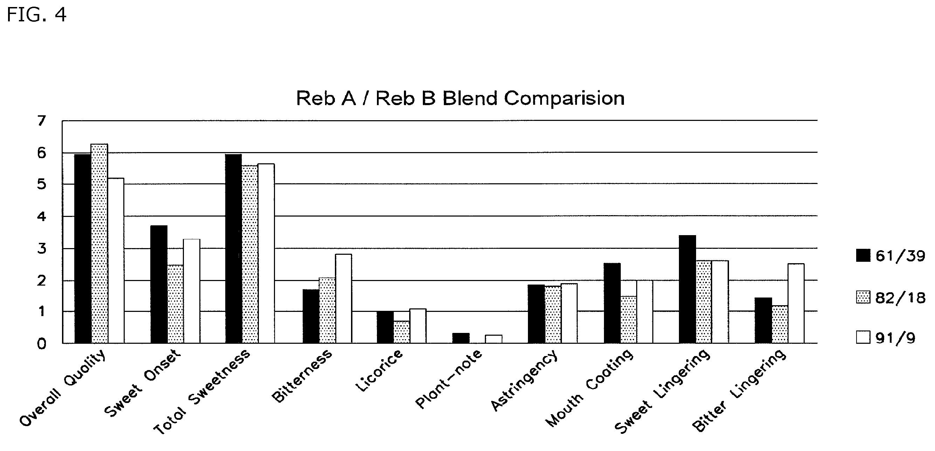

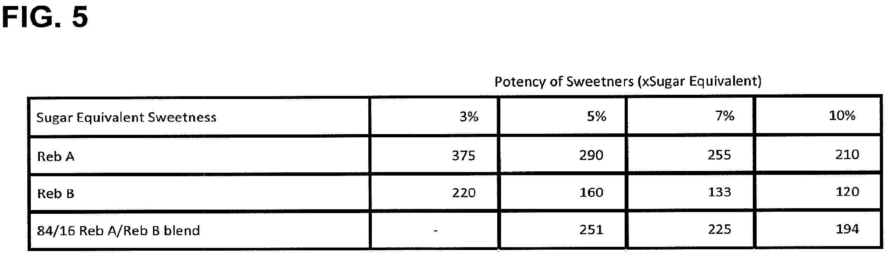

Stevia sweetener (Reb A, Reb B or blends) solutions were made by completely dissolving stevia into distilled water. Solutions were tasted and evaluated by a trained internal panel. Figure 3 shows the sweetness profile of Reb A and Reb B solutions made of 250 and 524 mg/kg concentrations, respectively. Figure 4 shows the effect of different ratio of Reb A and Reb B on sweetness profile and associated aftertastes. All solutions were made with different mass ratio of Reb A and Reb B as shown in Figure 4 to get the 7% sweetness equivalent. It is apparent that the blend of Reb A and Reb B show unexpectedly improved sweetness profile at certain ratios. Figure 5 shows the sweetness potency of Reb A, Reb B and one of the blends.

### EXAMPLE 2

### Effect of stevia composition on solubility in water

Solubility of sweetener is important for achieving the operational ease and desired sensory profile in beverage and food applications. Solubility tests were conducted using Reb A, Reb B, dry blend of Reb A & Reb B powders of different ratios, mixture of Reb A and Reb B made during the process and dried. Reb A and Reb showed solubility around 1% and 0.1% at room temperature and increased solubility on heating to a higher temperature. Table 1 shows the solubility of different ingredients and their blends.

**Table 1**

| Solubility in water for concentration of different blends | Reb A (as is) | Reb B (as is) | Dry blend of Reb B as a % of total glycosides (as is) | | | Blend made during the process, ratio of Reb B to total glycosides (as is) | | |
|---|---|---|---|---|---|---|---|---|
| | 100% | 100% | 10% | 16% | 26% | 10% | 16% | 26% |
| 0.5% | Yes | No* | No* | No* | No* | Yes | Yes | Yes |
| 1% | Yes | No* | No* | No* | No* | Yes | Yes | Yes |
| 2% | No | No* | No* | No* | No* | Yes** | Yes** | Yes** |
| 5% | No | No* | No* | No* | No* | Yes** | Yes** | Yes** |

### EXAMPLE 3

### Carbonated lemon-lime soft drink

Carbonated soft drinks were made with either Reb A, or Reb B and or blends of Reb A /Reb B and evaluated with a 12-member sensory panel. A few examples of such formulations are listed below in Table 2. The panel members tested for the overall quality, sweetness, bitterness, bitter aftertaste, sweetness lingering. The blend showed significant improvement of sweetness profile, especially reducing the bitterness and aftertaste and improving the overall taste quality. The ratio of Reb B to total glycosides that gave overall better sensory profile ranged from 0.5% to 50%, more specifically 10-30%.

**Table 2**

| Ingredient | Aspartame | Reb A | Blend 1 |
|---|---|---|---|
| Water | 99.6901 | 99.6926 | 99.6894 |
| Potassium Benzoate | 0.0212 | 0.0212 | 0.0212 |
| Potassium Citrate | 0.0212 | 0.0212 | 0.0212 |
| Xanthan Gum | 0.0121 | 0.0121 | 0.0121 |
| Citric Acid | 0.1102 | 0.1102 | 0.1102 |
| Malic Acid | 0.0042 | 0.0042 | 0.0042 |
| Lemon Lime Flavor | 0.0887 | 0.0887 | 0.0887 |
| Aspartame | 0.0525 | | |
| Reb A | | 0.0500 | 0.0444 |
| Reb B | | | 0.0088 |

### EXAMPLE 4

### No Fat yogurt

Samples were prepared according to formulas outlined below in Table 3. Samples included a full sugar reference, an aspartame reference, a Reb A control and several test samples with a RebA/RebB blend and with very small amount of other steviol glycosides. The samples were evaluated by a trained internal panel and screened for overall sweetness, bitterness, astringency, mouth coating, flavor intensity, acidity/tartness, sweet lingering and bitter lingering. Reb A 97 had bitterness at the end that was not present in samples with RebA/RebB blends. Both Reb A and blends enhanced the acidity of the yogurt. A significant improvement of taste was found with the blend of Reb B/Reb A, where Reb B to total glycosides ranged between 0.5 to 50%, more specifically 10% to 40% of Reb B to total glycosides.

**Table 3**

| | Control | 1 | 2 | 5 | 6 | 8 |
|---|---|---|---|---|---|---|
| RebB/TSG (%) | 0 | 0 | 0 | 16% | 36% | 26% |
| NF Yogurt | 92 | 99.96 | 99.94 | 99.93 | 99.94 | 99.94 |
| Sugar | 8 | | | | | |
| Aspartame | | 0.0400 | | | | |
| Reb A | | | 0.0250 | | 0.0250 | 0.0250 |
| Natural Flavor | | | 0.0350 | 0.0350 | 0.0350 | 0.0350 |
| Blend 1 | | | | 0.0350 | | |
| Reb B | | | | | 0.0140 | 0.0090 |

### EXAMPLE 5

### Chocolate Milk

A series of samples were prepared to have 8% sugar-equivalent sweetness. The control sample was sweetened with 5.5% sugar, test samples were sweetened with different ratios of Reb B/Reb A as shown in Table 4 below. The samples were evaluated by a trained internal panel and screened for overall sweetness, bitterness, astringency, mouth coating, flavor intensity, acidity/tartness, sweet lingering and bitter lingering. Reb A 97 had separate peaks for sweetness, dairy notes, and cocoa notes. The test samples had a very balanced and more rounded sweetness profile with an increasing amount of Reb B content in the sweetener as outlined in the following table. A significant improvement of taste was found with the blend of Reb B/Reb A. where Reb B to total glycosides ranged between 0.5 to 50%, more specifically 10% to 40% of Reb B to total glycosides.

**Table 4**

| Ingredient %'s | Control | 1 | 2 | 3 | 4 | 5 | 6 |
|---|---|---|---|---|---|---|---|
| RebB/TSG ratio | | 0% | 16% | 20% | 48% | 68% | 100% |
| Low-fat milk or Skim milk | 94.00 | 99.48 | 99.47 | 98.47 | 99.47 | 99.46 | 99.45 |
| Sugar | 5.50 | | | | | | |
| Cocoa Powder | 0.50 | 0.50 | 0.50 | 1.50 | 0.50 | 0.50 | 0.50 |
| Reb A+other glycosides | | 0.0242 | 0.0242 | 0.0242 | 0.0169 | 0.0121 | |
| Reb B | | | 0.0046 | 0.0060 | 0.0157 | 0.0262 | 0.0524 |
| Carrageenan | | 0.0160 | 0.0160 | 0.0160 | 0.0160 | 0.0160 | 0.0160 |
| Total | 100 | 100.0 | 100.0 | 100.0 | 100.0 | 100.0 | 100.0 |

### EXAMPLE 6

### Powdered Soft Drink

Mango Passion Fruit powdered soft drinks (PSD) having a 7% sugar equivalent sweetness were prepared in accordance with the formulas in Table 5. Samples included a Reb A control, and test samples prepared with RebA/RebB blends of different ratios; a few examples of the formulation are shown below in Table 5. As used herein, the term "TSG" refers to total steviol glycosides. The samples were evaluated by a trained internal panel andyc screened for overall sweetness, bitterness, astringency, mouth coating, flavor intensity, acidity/tartness, sweet lingering and bitter lingering. The test sample had a better balance of sweetness and acidity than Reb A 97. It was less tart overall and had a more pleasant flavor profile. A significant improvement of overall sweetness and mouthfeel was found with the blend of RebB/Reb A, where Reb B to total glycosides ranged between 0.5 to 40%, more specifically 5% to 30% of Reb B to total glycosides.

**Table 5**

| Ingredient | Reb A | Sample 1 | Sample 3 | Sample 4 |
|---|---|---|---|---|
| Reb B/TSG ratio | 0 | 16 | 5 | 36 |
| Water | 98.23 | 98.22 | 98.23 | 98.21 |
| Maltodextrin | 1.2868 | 1.2868 | 1.2868 | 1.2868 |
| Citric Acid | 0.216 | 0.216 | 0.216 | 0.216 |
| Sodium Citrate | 0.096 | 0.096 | 0.096 | 0.096 |
| Mango Flavor | 0.0768 | 0.0768 | 0.0768 | 0.0768 |
| Malic Acid | 0.036 | 0.036 | 0.036 | 0.036 |
| Passion Fruit Flavor | 0.0348 | 0.0348 | 0.0348 | 0.0348 |
| Reb A | 0.0250 | 0.025 | 0.025 | 0.025 |
| Reb B | | 0.0051 | 0.0015 | 0.014 |

### EXAMPLE 7

### Table top sweeteners

Several table top formulations were developed using different bulking agents, as examples sugar, fructose, dextrose, maltodextrin, polyols, fibers (inulin, Fibersol 2) etc. Table 6 lists a few examples of the formulation with different ratio of Reb B to total glycosides and dextrose as the bulking agent. Each sample of 1g wt. was developed for providing sweetness equivalent to 8-9 grams of sugar. Each sample was tested in coffee by 11 panel members and screened for sweetness, coffee flavors, bitterness, overall mouthfeel, and residual (lingering) sweetness and bitterness. As ratio of Reb B to total steviol glycosides increased the overall taste and preference increased. A significant improvement of overall sweetness and mouthfeel was found with the blend of RebB/Reb A, where Reb B to total glycosides ranged between 1 to 40%, more specifically 7% to 30% of Reb B to total glycosides.

**Table 6**

| Reb B/TSG | Control | Sample 1 | Sample 2 | Sample 3 |
|---|---|---|---|---|
| | 0 | 16 | 25 | 100 |
| Reb A | 0.0400 | 0.0336 | 0.0300 | |
| Reb B | | 0.0064 | 0.0100 | 0.0500 |
| Dextrose | 0.9600 | 0.9560 | 0.9600 | 0.9500 |

### EXAMPLE 8

### Baked Goods

The texture and taste profile of baked goods improved with the blend of Reb B and Reb A. Several samples were developed with different ratios of Reb B and Reb A or SG95, a steviol glycoside product available from PureCircle, Inc.; some examples are shown in the Table 7. The samples were evaluated by a trained internal panel and screened for overall sweetness, texture, mouthfeel, mouth coating, flavor intensity, sweet lingering and bitter lingering. The test sample had a better balance of sweetness and overall acceptability. A significant improvement of overall sweetness and mouthfeel was found with the blend of RebB and Reb A or SG95, where Reb B to total glycosides ranged from 0.5% to 40%, more specifically 7% to 30% of Reb B to total glycosides.

**Table 7**

| Ingredients | Control | Sample 1 | Sample 2 | Sample 3 |
|---|---|---|---|---|
| Reb B/TSG (%) | 0 | 0 | 16 | 33 |
| All-purpose flour | 24.42 | 17.629 | 17.629 | 17.629 |
| Sugar | 23.14 | 12.372 | 12.372 | 12.372 |
| Whole wheat flour | | 5.8763 | 5.8763 | 5.8763 |
| Maltodextrin | | 2.1368 | 2.1368 | 2.1368 |
| Fibersol2 | | 1.0684 | 1.0684 | 1.0684 |
| Modified starch | | 1.0684 | 1.0684 | 1.0684 |
| Poppy seeds | 1 | 1.0684 | 1.0684 | 1.0684 |
| Baking powder | 0.48 | 1.0684 | 1.0684 | 1.0684 |
| Lemon flavor | 0.83 | 0.886 | 0.886 | 0.886 |
| Salt | 0.71 | 0.7479 | 0.7479 | 0.7479 |
| Baking soda | | 0.3205 | 0.3205 | 0.3205 |
| NSF-02 (Natural flavor) | | 0.0635 | 0.0635 | 0.0635 |
| Reb B | | | 0.025 | 0.02 |
| SG95 | | 0.0302 | | 0.0302 |
| Reb A | | | 0.005 | 0.01 |
| Wet Ingredients | _ | | | |
| Milk, 2% | 23.99 | 27.244 | 27.244 | 27.244 |
| Soybean oil | 14.78 | 11.753 | 11.753 | 11.753 |
| Eggs | 9.54 | 8.5473 | 8.5473 | 8.5473 |
| Water | | 5.342 | 5.342 | 5.342 |
| Yogurt, Plain non-fat | | 1.6026 | 1.6026 | 1.6026 |
| Lemon juice | 0.59 | 0.641 | 0.641 | 0.641 |
| Vanilla extract | 0.52 | 0.5342 | 0.5342 | 0.5342 |
| Total | 100 | 100 | 100 | 100 |

### EXAMPLE 9

### Black tea with Peach flavor

The control tea sample had 7.7% sugar content. The test formulas were modified to reduce 70% sugar with Reb A or Alpha (a combination of Reb A and Reb B and minute amount of other steviol glycosides). The samples were evaluated by a trained internal panel and screened for overall sweetness, sweet onset, mouthfeel, flavor intensity, bitterness, sweet lingering and bitter lingering. Among the test samples, the sample with PureCircle alpha had a better balance of sweetness, overall acceptability, earlier onset of sweetness and sugar-like taste profile.

**Table 8**

| Ingredient | Control | Alpha | Reb A |
|---|---|---|---|
| Water | 91.849 | 97.2715 | 97.27498 |
| Sugar | 7.7000 | 2.2500 | 2.2500 |
| Black Tea | 0.2750 | 0.2750 | 0.2750 |
| Sodium Citrate | 0.0550 | 0.0550 | 0.0550 |
| Citric Acid | 0.0440 | | |
| Ascorbic Acid | 0.0440 | 0.0440 | 0.0440 |
| Peach Flavor | 0.0330 | 0.0330 | 0.0330 |
| Xanthan Gum | | 0.0035 | 0.0035 |
| Malic Acid | | 0.0440 | 0.0440 |
| PureCircle -- Alpha | | 0.0240 | |
| Reb A 97-PureCircle | | | 0.0205 |
| TOTAL | 100 | 100 | 100 |

### EXAMPLE 10

### Sugar Free Black Tea

The control tea sample with 7.5% sugar content was compared against two test formulas that were sweetened with Reb A or Alpha (a combination of Reb A and Reb B and minute amount of other steviol glycosides). The samples were evaluated by a trained internal panel and screened for overall sweetness, sweet onset, mouthfeel, flavor intensity, bitterness, sweet lingering and bitter lingering. Among the test samples, the sample with Alpha had better sweetness profile with less bitterness and aftertaste.

**Table 9**

| | Control | Alpha | Reb A |
|---|---|---|---|
| Water | 92.060 | 99.4810 | 97.4830 |
| Sugar | 7.5000 | | |
| Black Tea | 0.2800 | 0.2800 | 0.2800 |
| Lemon Flavor | 0.0570 | 0.0570 | 0.0570 |
| Sodium Citrate | 0.0500 | 0.0500 | 0.0500 |
| Citric Acid | 0.0530 | | |
| PureCircle Alpha | | 0.0420 | |
| PureCircle Reb A 97 | | | 0.0400 |
| PureCircle NSF-02 | | 0.0200 | 0.0200 |
| Malic Acid | | 0.0350 | 0.0350 |
| Xanthan Gum | | 0.0350 | 0.0350 |

### EXAMPLE 11

### No-Sugar added 50% Orange Juice Drink

The juice drinks were made with sugar, Alpha, and Reb A as shown in the table below. All samples had a pH around 3.75. The samples were evaluated by a trained internal panel and screened for overall sweetness, sweet onset, mouthfeel, flavor intensity, bitterness, sweet lingering and bitter lingering. The sample with Alpha was less bitter, more tart, more fresh orange flavor, less astringent and less bitter lingering than that with Reb A. Alpha was perceived as significantly closer to control in overall flavor profile than Reb A formula.

**Table 10**

| Ingredient | Control-Sugar | Alpha | Reb A |
|---|---|---|---|
| Water | 43.9400 | 49.9075 | 49.9160 |
| 100% Juice-PureCircle | 50.0000 | 50.0000 | 50.0000 |
| Sugar | 6.0000 | | |
| Alpha -- PureCircle | | 0.0225 | 0.0215 |
| Flavor | 0.0400 | 0.0700 | 0.0825 |
| Citric Acid | 0.0200 | | |
| TOTAL | 100 | 100 | 100 |

### Example 12

### Lemon-Lime Carbonated Soft Drink

The control carbonated soft drink sample was made with high fructose corn syrup (HFCS) 42 and other test samples were made with a combination of HFCS and Alpha or Reb A to attain 30% less calorie. The samples were evaluated by a trained internal panel and screened for overall sweetness, sweet onset, mouthfeel, flavor intensity, bitterness, sweet lingering and bitter lingering. Product with alpha feels smoother in mouth and is identified as closer to control than Reb A formula. It has less of a sharp sweetness peak than Reb A and reduced terpene notes compared to Reb A. The overall flavor is less altered compared to Reb A.

**Table 11**

| Ingredient | Control | Alpha | Reb A |
|---|---|---|---|
| Water | to QS | to QS | to QS |
| HFCS 42 | 14.8333 | 10.3833 | 10.3833 |
| Reb A 97 | | | 0.0049 |
| Alpha | | 0.005767 | 0.0050 |
| xanthan gum | | 0.0050 | |
| Sodium Benzoate | 0.0263 | 0.0263 | 0.0263 |
| Potassium Citrate | 0.0263 | 0.0263 | 0.0263 |
| Citric Acid | 0.1500 | 0.1433 | 0.1433 |
| Malic Acid | | 0.0050 | 0.0050 |
| Flavor | 0.1110 | 0.1110 | 0.1110 |

### EXAMPLE 11

### Synergy with natural flavor

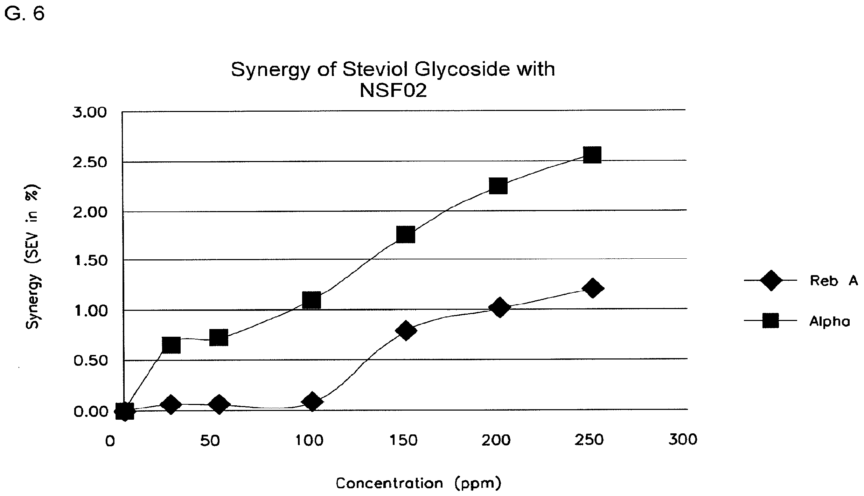

NSF02 is a stevia derived natural flavor that can modify flavor and enhance sweetness in different food matrix. When NSF02 was mixed with required quantity of Alpha or Reb A in acidic solution (pH=3.8) to attain 8% sugar equivalent sweetness, it was discovered that Alpha shows enhanced sweetness in presence of very small amount of NSF02 (25 ppm or less), whereas more than 100 ppm NSF02 had to be added to attain any synergy with Reb A as shown in Figure 6.

Although the invention and its advantages have been described in detail, it should be understood that various changes, substitutions and alterations can be made herein without departing from the spirit and scope of the invention as defined by the appended claims. Moreover, the scope of the application is not intended to be limited to the particular embodiments of the invention described in the specification. As one skilled in the art will readily appreciate from the disclosure of the invention, the compositions, processes, methods and steps, presently existing or later to be developed that perform substantially the same function or achieve substantially the same result as the corresponding embodiments described herein are encompassed by the scope of the invention.

## Claims

1. A sweetener composition comprising a steviol glycoside blend comprising a mixture of Rebaudioside A and processed Rebaudioside B, wherein the ratio of processed Rebaudioside B to Rebaudioside A in the steviol glycoside blend is about 18:82, 39:61 or 16:84, wherein the steviol glycoside blend is made by a process comprising the steps of:
a. combining a Rebaudioside B composition with water at a ratio of about 1:1 to form a mixture;
b. increasing the temperature of the mixture by a gradient heating method comprising heating the mixture at a rate of 1°C/min;
c. holding the mixture at an elevated temperature of 110°C-140°C for 0-120 min;
d. decreasing the temperature of the mixture to room temperature at a gradient of 1°C/min to obtain a Rebaudioside B composition solution;
e. spray drying the Rebaudioside B composition solution to obtain the processed Rebaudioside B composition; and
f. mixing the processed Rebaudioside B composition with Rebaudioside A to make the steviol glycoside blend.

2. A sweetener composition according to claim 1, further comprising other steviol glycosides selected from the group consisting of: stevioside, Rebaudioside C, Rebaudioside D, Rebaudioside E, Rebaudioside F, dulcoside A, steviolbioside, rubusoside, other steviol glycosides found in *Stevia rebaudiana* Bertoni plants, and mixtures thereof.
